Europäisches Patentamt

European Patent Office

Office européen des brevets

(19)

(11) Publication number: **0 050 024**
**B1**

(12) **EUROPEAN PATENT SPECIFICATION**

(45) Date of publication of patent specification: **29.01.86**

(21) Application number: **81304712.3**

(22) Date of filing: **09.10.81**

(51) Int. Cl.⁴: **G 11 B 5/588**

(54) Tracking-error correcting system in video reproducing apparatus.

(30) Priority: **09.10.80 JP 141209/80**
**16.01.81 JP 5273/81**
**12.06.81 JP 91181/81**

(43) Date of publication of application:
**21.04.82 Bulletin 82/16**

(45) Publication of the grant of the patent:
**29.01.86 Bulletin 86/05**

(84) Designated Contracting States:
**DE FR GB NL**

(56) References cited:
**GB-A-2 068 599**
**GB-A-2 071 879**

**Patent Abstracts of Japan, vol. 1, no. 73, 14
July 1977, page 847E77**

**Patent Abstracts of Japan, vol. 1, no. 126, 20
October 1977, page 5511E77**

(73) Proprietor: **Matsushita Electric Industrial Co.,
Ltd.**
**1006, Oaza Kadoma**
**Kadoma-shi Osaka-fu, 571 (JP)**

(72) Inventor: **Honjo, Masahiro**
**30-23, Niyukihigashi-machi**
**Neyagawa-shi Osaka-fu (JP)**
Inventor: **Tomita, Masao**
**271-2, Oaza-uchiage**
**Neyagawa-shi Osaka-fu (JP)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

In a rotary head magnetic recording and reproducing apparatus it is necessary to detect tracking error between a reproducing head and a recorded track and to move the reproducing head in the direction of the axis of rotation so that the reproducing head is placed at a better tracking position. Such a system is called an 'auto-tracking system'.

In all conventional systems, the reproducing head is moved while the head is contacting the magnetic tape, so that 'jitter' or 'color flicker' of the monitor television picture are unavoidable because of the influence of the head movement.

Here, we describe two conventional examples.

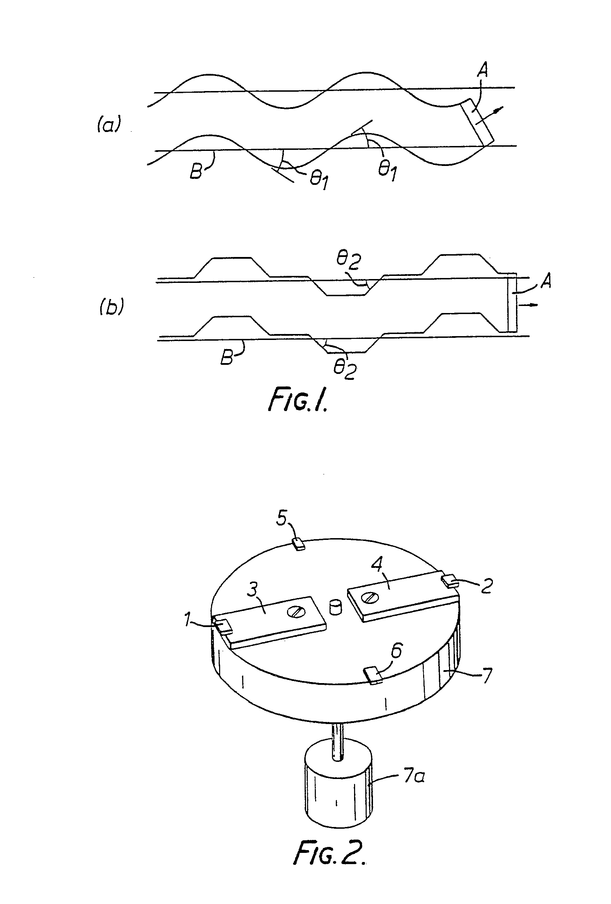

The first system vibrates the reproducing head in the direction of the axis of rotation at a standard frequency, and detects the envelope of reproduced high frequency video signal (hereinafter referred to as RF signal). Then this first system compares the phase difference between said envelope and said standard frequency, whereby it detects the tracking error between the head and recorded track, and moves the head in the direction that attains better tracking. But in the first system, the reproducing head is always vibrated as shown in Fig. 1(a). A reproducing head A crosses the recorded track B with an angle (Maximum angle is $\theta_1$). Accordingly, the influence of the movement of the head causes jitter or color flicker to appear on the picture of the monitor television. In addition, the influence sometimes causes the resonance of the piezo electric element, which has a bad influence on the picture of the monitor television.

The second system detects the envelope of RF signal and gets its level by a sample-and-hold circuit, and then compares the level of the envelope with the level of the previously sampled envelope at several points in a field, so as to move the reproducing head in the direction to attain better tracking while the reproducing head is contacting the magnetic tape. But, in this second system, as shown in Fig. 1(b), the reproducing head A crosses the recorded track B with an angle ($\theta_2$). Accordingly, the movement of the head causes jitter of color flicker of the picture.

The present invention provides a tracking-error correcting system in video reproducing apparatus, comprising a reproducing head arranged to be alternately in and out of contact with a magnetic tape, envelope detecting means for detecting an envelope of reproduced video signal, two sampling and holding means each for sampling and holding an output signal of said envelope detector at a predetermined timing in each field, timing pulse generating means for generating sampling pulses applied to said sampling and holding means and clock signals, comparing means for comparing output signals of said two sampling and holding means in turn, control voltage generating means for generating a control voltage for controlling movement of said reproducing head, and controlling means for controlling said control voltage generating means according to an output signal of said comparing means and the clock signals from said timing pulse generating means, said reproducing head being moved according to said control voltage in such a direction to increase the level of said envelope, characterised in that said reproducing head is moved only during the period when it is not in contact with the magnetic tape so that scanning trace of said reproducing head is always maintained parallel to the recorded track.

The invention solves the above mentioned problems. The invention has the advantage that the head is moved to attain a better tracking position, without causing jitter or color flicker on the TV, by moving the head while the head is not in contact with the tape.

Fig. 2 shows a schematic view of a VTR using a piezo-electric element. In Fig. 2, reference numerals 1,2 show reproducing heads 3,4 show bi-morph leaves each having a piezo electric element 5,6 show recording and reproducing heads, 7 shows a rotary cylinder, 7a shows a motor. Bi-morph leaves 3, 4 are controlled in movement with a control voltage.

Hereinafter, we will describe in detail how to control the movement of reproducing heads with the aid of the accompanying drawing of which:

Fig. 1 shows a scanning trace of the reproducing head and a recorded track in a conventional tracking-error correcting system;

Fig. 2 shows a schematic of a VTR using a piezo electric section;

Fig. 3 shows the relation between a control voltage and RF signal;

Fig. 4 shows a schematic of the relation between control voltage and envelope level;

Fig. 5 shows a schematic block diagram of this invention;

Fig. 6 shows a schematic circuit diagram of this invention;

Fig. 7 shows a timing chart of this invention;

Fig. 8 shows a recording pattern on the tape and a scanning trace of a head in still motion mode and double fast motion mode;

Fig. 9 shows a triangular wave for abnormal reproduction, control voltage from this invention, mix signal and RF signal;

Fig. 10 shows a schematic block diagram in abnormal reproduction;

Fig. 11 shows a recorded and non-recorded part of the magnetic tape;

Fig. 12 shows an example of the relation between the recorded track and the reproducing head;

Fig. 13 shows the relation of the RF signal level and the distance moved of a head;

Fig. 14 shows a schematic block diagram of a further aspect of the invention;

Fig. 15 shows a recorded part, a non-recorded part and compulsory movement of heads in the non-recorded part.

Now, the reproducing speed of the magnetic tape is the same as the recording speed.

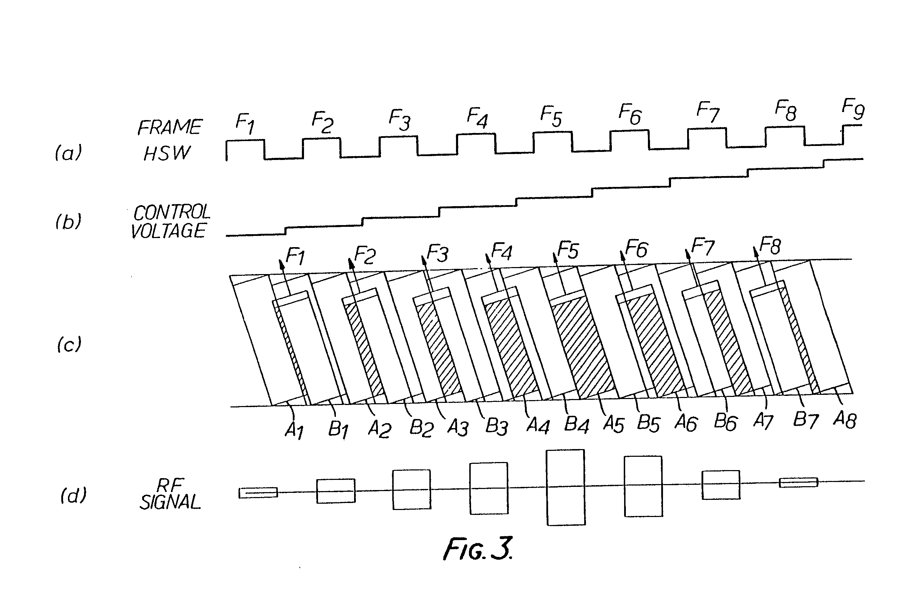

Fig. 3(a) shows a head switch signal (HSW), when the HSW is at a high level, reproducing head 1 is touching the magnetic tape and reproduces signals from the recorded track. In Fig. 3 (c), $A_1$, $A_2$, $A_3$ ... are tracks recorded by recording head with azimuth A, and $B_1$, $B_2$, $B_3$, ... are tracks recorded by recording head with azimuth B. Reproducing head 1 with azimuth A can reproduce signals from the tracks $A_1$, $A_2$, ... but can't reproduce signals from the tracks $B_1$, $B_2$, .... When the control voltage which increases step by step in each frame is applied to the piezo-electric element as shown in Fig. 3(b), the scanning trace of the reproducing head changes as shown in Fig. 3(c), so that RF signal level changes as shown in Fig. 3(d). In Fig. 3(c), an oblique part shows a reproductive part which has the same azimuth A as reproducing head 1, and $F_1$, $F_2$ ... are first frame, second frame ....

Next, we will describe how to control the voltage to the piezo electric element so that RF signal level is kept at a maximum level. This part of the system samples and holds the envelope of the RF signal from the VTR, and changes (e.g. increases) the control voltage to the piezoelectric element, and then compares the envelope level in the next frame with the held envelope level in the previous frame. As a result, if the next envelope level is higher than the previous envelope level, the control voltage, will be further increased, and continue comparing the envelope level with further (next) frame's envelopes. In other words, the control voltage will be changed in the same direction until the envelope level becomes lower than the previous envelope level. When the envelope level is lower than the held envelope level of the previous frame, the direction of the control voltage will be inverted.

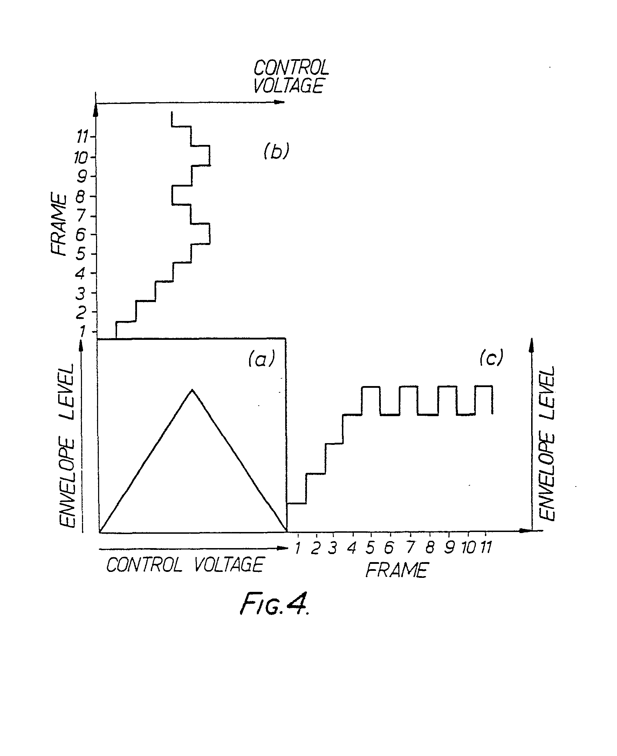

Fig. 4 shows a schematic diagram of a relation between the control voltage and the envelope level. Fig. 4(b) shows the change of the control voltage in each field and Fig. 4(c) shows the change of the reproduced envelope level. As shown in Fig. 4, until the 5th frame the envelope level increases in the same direction and the control voltage also increases. However, at 6th frame, the envelope levels begins to decrease, that is, the direction of the control voltage is inverted to decreasing. Also, the envelope level at the 7th frame increases again. The envelope level of 8th frame decreases. As the above, the direction of the control voltage is inverted in turn.

In this way, this part of the system controls the control voltage so as to keep a balance in the neighborhood of any point to obtain the maximum envelope level and moves the reproducing head while the head is not contacting the magnetic tape. Accordingly, the reproducing head scans the recording track keeping parallel to it. This means no jitter or color flicker on the TV picture.

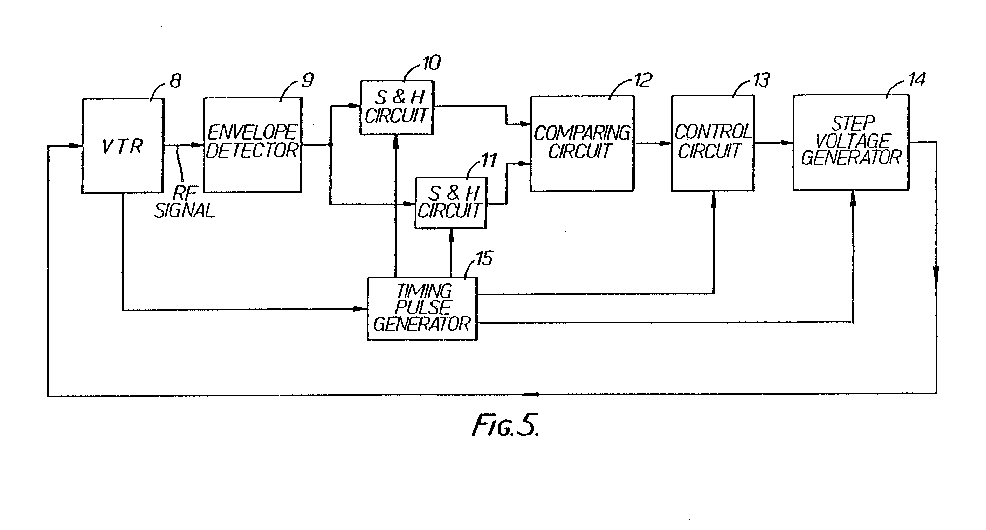

Fig. 5 shows a schematic block diagram of this invention (only one head is considered for simplicity). An envelope detector 9 detects the envelope of RF signal from VTR 8, and supplies the output signal to two S/H circuits 10, 11 (two S/H circuits are required for one reproducing head). The S/H circuits sample and hold the input signal in turn according to sampling pulses from a timing pulse generator 15. Outputs of the S/H circuits are applied to a comparing circuit 12, and output of comparing circuit 12 is applied to a control circuit 13. Control circuit 13 controls a control voltage generator 14 according to signals from the timing pulse generator 15 and the output from the comparing circuit 12. Control voltage generator 14 controls the movement of the reproducing head in VTR 8.

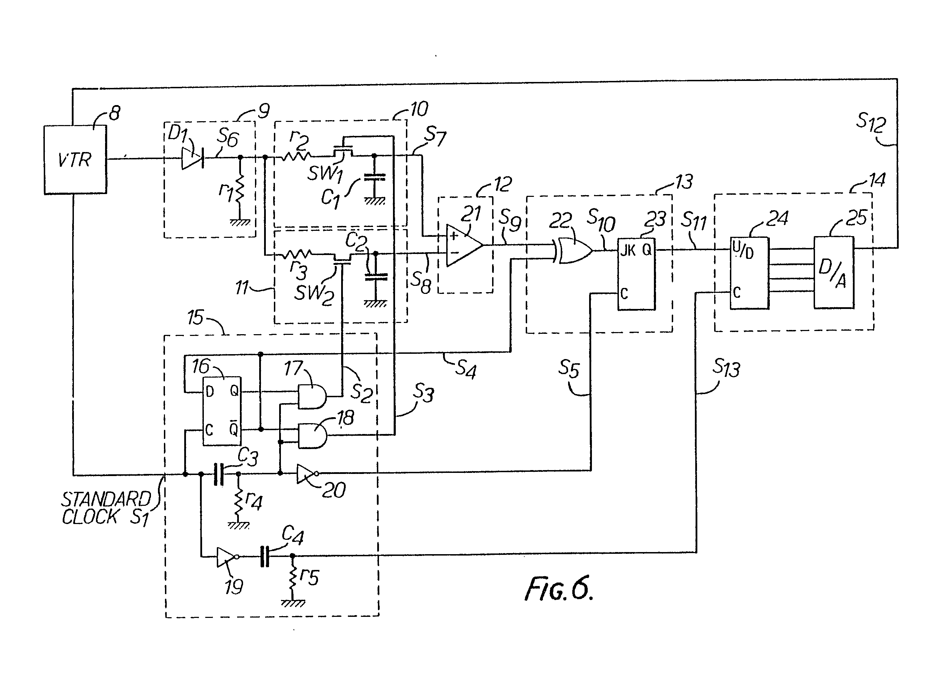

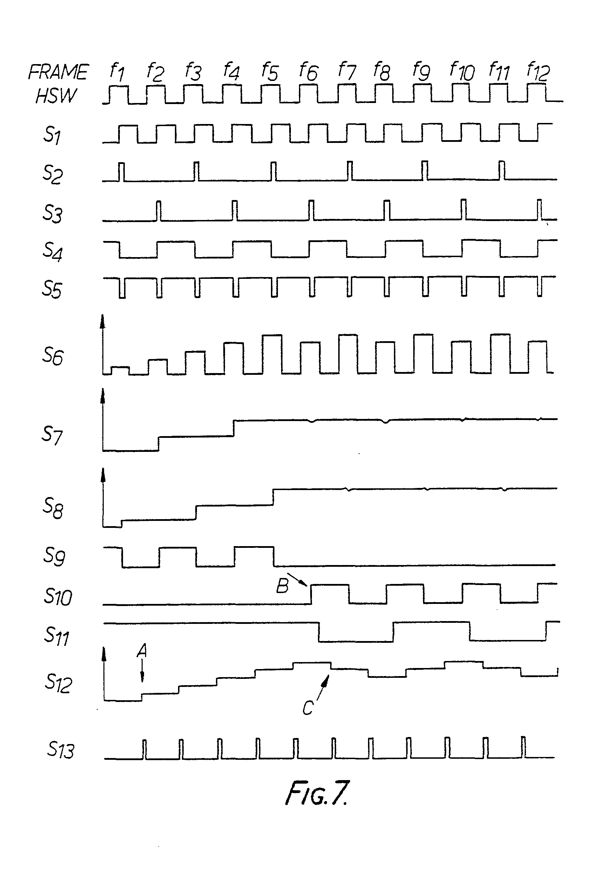

Fig. 6 shows a circuit diagram of this invention, and Fig. 7 shows a timing chart corresponding to Fig. 6. Envelope detector 9 comprises a diode $D_1$ and a resistor $r_1$, and detects the envelope of the RF signal. S/H circuits 10, 11 comprise two switches $SW_1$, $SW_2$, two resistors $r_2$, $r_3$, and two condensers $C_1$, $C_2$, respectively. Here, resistors $r_2$, $r_3$ are inserted to cancel high frequency noises, but are not essential components for this invention. Timing pulse generator 15 comprises, a D-flip flop (D-FF) 16, AND gates 17, 18, inverters 19, 20, condensers $C_3$, $C_4$ and resistors $r_4$, $r_5$. This generator generates timing clocks $S_2$, $S_3$, $S_4$, $S_5$, $S_{13}$ from a standard clock $S_1$. Comparing circuit 12 comprises an Op-Amp 21. Control circuit 13 comprises an Ex-OR gate 22 and a JK-flip flop (JK-FF) 23. Control voltage generator 14 comprises an up-down counter 24 and a D/A converter 25 (e.g., lader network resistors).

Now, referring to Fig. 7, we discuss the second frame ($f_2$). After the control voltage increase at a point A, the system of this invention samples and holds the envelope level of the RF signal ($S_6$) by sampling pulses ($S_3$). The signal ($S_7$) increases till ($S_7$)>($S_8$), whereby the output ($S_9$) of the comparing circuit becomes high ("H") level. Output of Ex-OR gate 22 becomes Low ("L") level as $S_{10}$ because its input signals $S_9$, $S_4$ are both "H". Thus, output ($S_{11}$) of JK-FF 23 remains unchanged (i.e. remains "H") on the clock $S_5$. Accordingly, the up-down counter 24 begins counting up again, so that the control voltage signal increases as $S_{12}$. This action continues repeatedly until the held level of the envelope becomes lower than the held level of the previous envelope.

Next, we discuss the sixth frame ($f_6$). Signal $S_8$ is held by $S_2$, and $S_7$ is held by $S_3$. At this time, the level of $S_7$ is lower than $S_8$, so that the output ($S_9$) of the comparing circuit 12 becomes "L", and another input ($S_4$) of the Ex-OR is "H", so that the output ($S_{10}$) of the Ex-OR gate 22 turns to "H" (at a point B). Thus the output ($S_{11}$) of the JK-FF 23 turns to "L" at the positive going edge of clock $S_5$. Accordingly, the up-down counter 24 counts down on the positive going edge of clock $S_{13}$, so that the output of the control voltage generator 14 decreases (at a point C of $S_{12}$).

The standard clock $S_1$ means a signal whose phase is different from that of the HSW signal about 90°C. So, the sampling hold clocks $S_2$, $S_3$ are generated at about the center of the reproducing field. This is a strong point of this invention because the level of the reproduced envelope of the center of a field is more stable than that at the edge of a field. Then, the signal $S_{13}$ is generated at about the center in the unreproducing field, this is another strong point of this invention because the sysem of the invention changes the state of the reproducing head when the head is not in contact with the magnetic tape.

In this way, this invention keeps the maximum envelope level by controlling the control voltage $S_{12}$.

By now, we have described the tracking-error correction of this invention in normal reproduction in which the reproducing tape speed is the same as the recording tape speed.

Hereinafter, we will describe the tracking-error correction in abnormal reproduction in which the reproducing tape speed is different from the recording tape speed (i.e., still motion, slow motion, and fast motion).

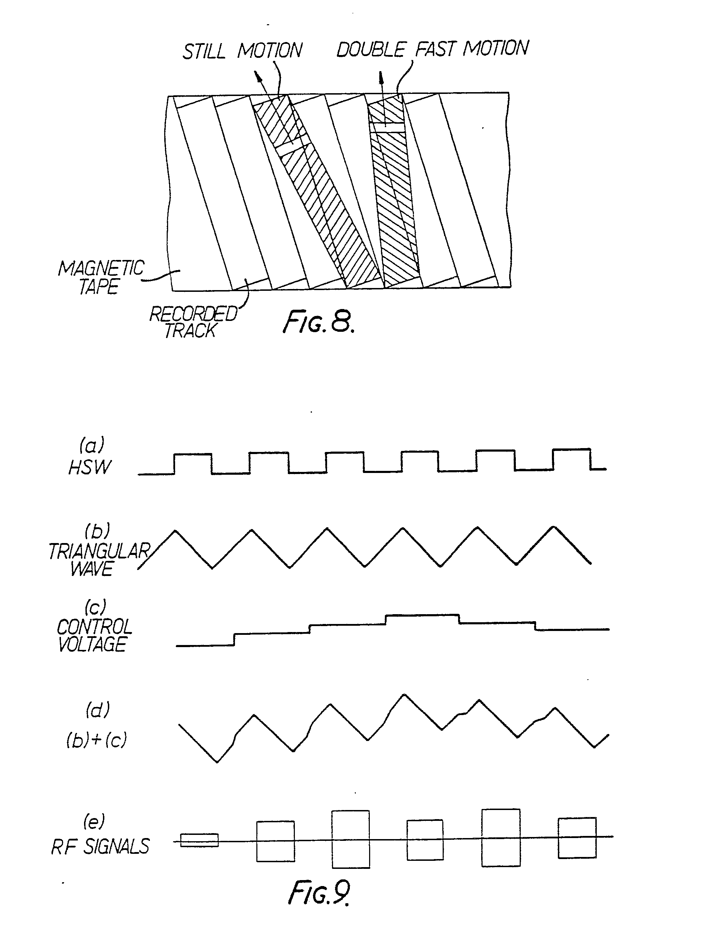

Fig. 8 shows the recorded pattern on the tape and the head scanning trace in still motion and double fast motion modes. In Fig. 8, the head scanning trace in abnormal reproduction is different from the recorded track, so that it is necessary for using this invention to adjust the slant of the head scanning trace. Here, it is possible to adjust the slant by applying a triangular wave or a saw wave to the moving head. Fig. 9 shows the still motion mode Fig. 9(a) shows HSW, Fig. 9(b) shows a triangular wave for abnormal reproduction, Fig. 9(c) shows the control voltage signal according to is invention, Fig. 9(d) shows the mixed signal to moving head, Fig. 9(e) shows an example of RF signal from VTR.

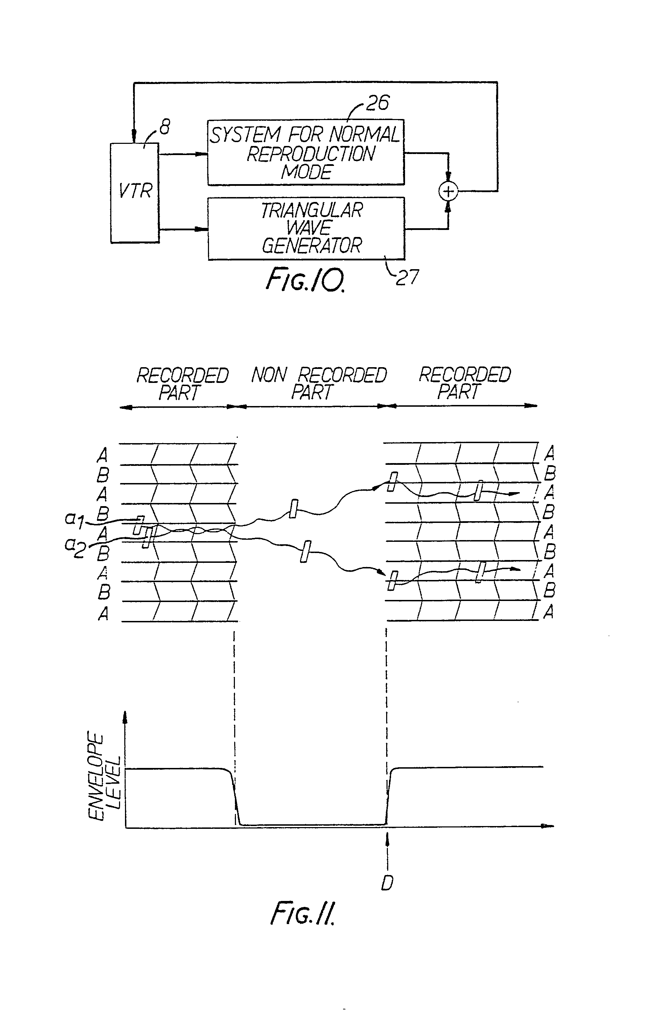

Fig. 10 shows a schematic block diagram in abnormal reproduction. As shown in Fig. 10, we prepare a triangular wave generator 27 which corrects the difference of slant between the trace of the reproducing head and the recorded track. Then the signal from the triangular wave generator 27 and the signal from the tracking error correcting system for normal reproduction mode are mixed, and the mixed signal is applied to the moving head in VTR 8. By this configuration, this system can correct the tracking error and keep the scanning trace of the reproducing head parallel to the recorded track.

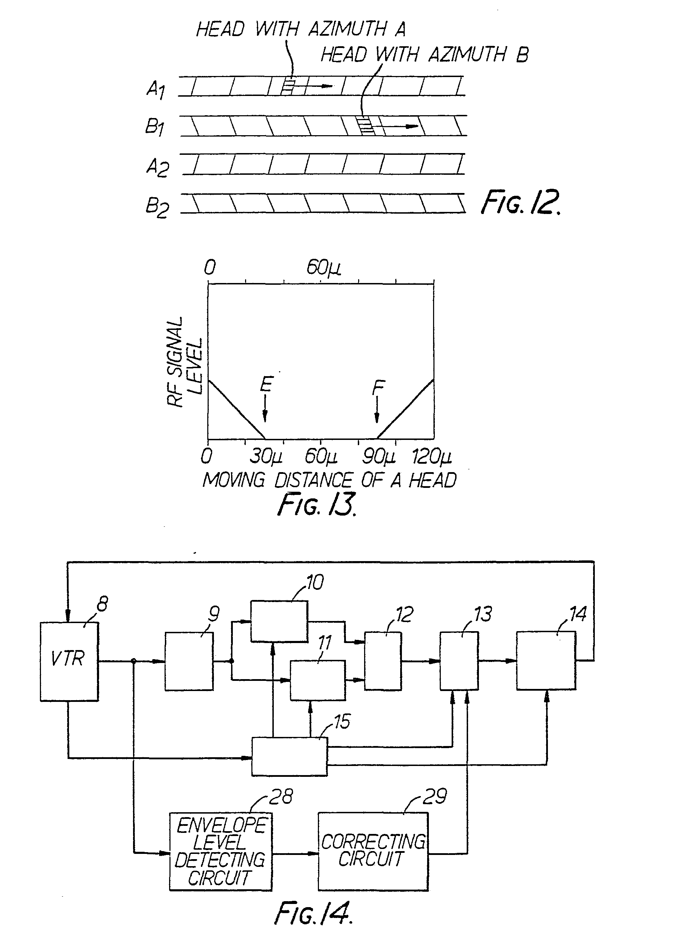

Now, as mentioned above, we detailed the case wherein the RF signal is reproduced. But if the RF signal is not reproduced or is reproduced as a very low level signal, conventional auto-tracking systems unavoidably mistook the action of the tracking system. For an example of a low RF level, there is the case in which the reproducing head scans part of the magnetic tape on which nothing was recorded, as shown in Fig. 11. Fig. 11 shows a recorded part and non-recorded part on the magnetic tape, and the envelope level. Recorded track A has A azimuth, and recorded tracks B and B azimuth, and the reproducing heads $a_1$, $a_2$ have A azimuth. When the head reproduces the signal again (point D in Fig. 11) two reproducing head sometimes reproduce another track as shown in Fig. 11, in this case the reproduced picture becomes extremely ugly. The other example, there is the case in which the reproducing head's width is smaller than the distance moved of the magnetic tape in a frame. Fig. 12 shows the recorded tracks $A_1$, $A_2$, ... which were recorded by recording head with azimuth A, and the recorded tracks $B_1$, $B_2$, ... which were recorded by recording head with azimuth B. The slant of head gap with azimuth A is different from the slant of head gap with azimuth B. So, the head with azimuth A can reproduce the recorded tracks with azimuth A, but can't reproduce the recorded tracks with azimuth B.

Fig. 12 shows (for example) the head width is 30μ, and the distance moved of the magnetic tape in one frame is 120μ. When the head with azimuth A moves 120μ in the direction of the track width, the reproducing envelope changes as shown in Fig. 13. That is to say, while the head moves from 30μ (point E) to 90μ (point F), the head can't reproduce. If the reproducing head is in this position, the head can't reproduce anything, so that it is impossible to correct the tracking error by using conventional tracking systems.

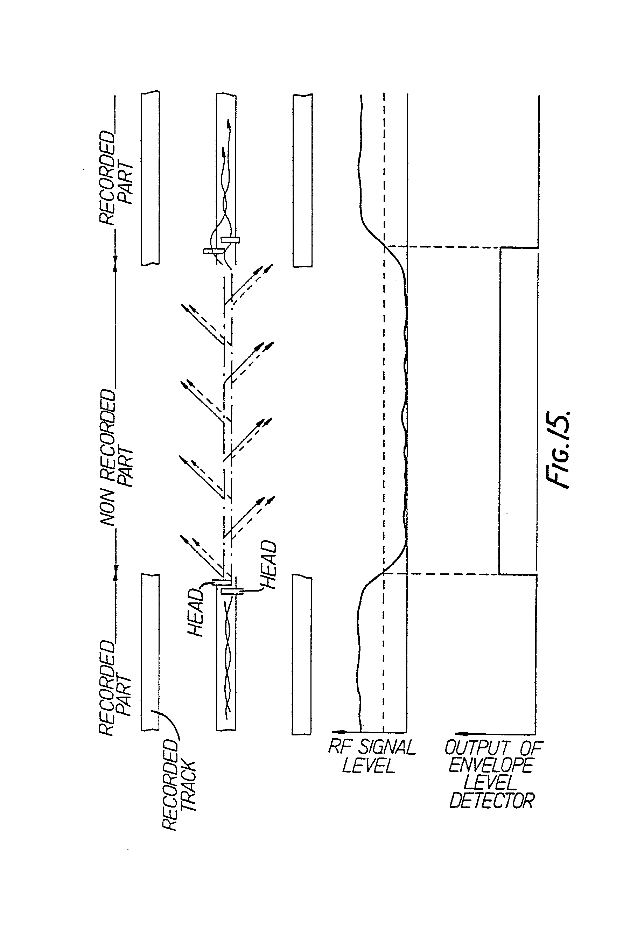

Fig. 14 shows a schematic block diagram of a further aspect of the invention in order to solve the above-mentioned problems. The block numbers 8—15 are the same as shown in Fig. 5, 28 is an envelope level detector and 29 is a correct circuit. When the envelope level from a VTR is lower than a predetermined threshold, an envelope level detector 28 applies a signal to a correction circuit 29. The correction circuit 29 controls the movement of the reproducing head (compulsory movement) as shown in Fig. 15. Fig. 15 shows a recorded and non-recorded part on the magnetic tape and compulsory movement of heads and the level of RF signal and the output signal of the envelope level detector. Here, compulsory movement means that the reproducing head move in the direction of the axis of rotation from a predetermined position step by step and the next moment, the other direction of the axis of rotation from said predetermined position step by step. In this case, the distance of the heads' movement is about ±1 track pitch as shown in Fig. 15, whereby two heads can track again on the same recorded track and they can track again the nearest track from a position in which the head could not reproduce any signal.

In this way, this system automatically detects the tracking error between a reproducing head and a recorded track, and moves the reproducing head in the direction that attains better tracking position without causing jitter or color flicker of the picture on the TV.

Further, many parts of the system of the invention are constructed by digital circuits, so that they are easily replaced by a micro computer (especially the control circuit and timing pulse generator).

**Claims**

1. A tracking-error correcting system in video reproducing apparatus, comprising a reproducing head (1, 2) arranged to be alternately in and out of contact with a magnetic tape, envelope detecting means (9) for detecting an envelope of reproduced video signal, two sampling and holding means (10, 11) each for sampling and holding an output signal of said envelope detector at a predetermined timing in each field, timing pulse generating means (15) for generating sampling pulses applied to said sampling and holding means and clock signals, comparing means (12) for comparing output signals of said two sampling and holding means in turn, control voltage generating means (14) for generating a control voltage for controlling movement of said reproducing head, and controlling means (13) for controlling said control voltage generating means according to an output signal of said comparing means and the clock signals from said timing pulse generating means (15), said reproducing head (1,2) being moved according to said control voltage in such a direction to increase the level of said envelope, characterised in that said reproducing head (1,2) is moved only during the period when it is not in contact with the magnetic tape so that scanning trace of said reproducing head is always maintained parallel to the recorded track.

2. A system according to claim 1, further comprising envelope level detecting means (28) for comparing the level of envelope of reproduced video signal with a predetermined threshold, and correcting means (29) responsive to an output signal of said envelope level detecting means for controlling said control means, whereby said correcting means compulsorily moves said reproducing head (1,2) in the direction of the axis of rotation step by step or in the opposite direction of the axis of rotation step by step when the level of envelope is lower than the predetermined threshold, and stops said reproducing head when the level of envelope is higher than the threshold level.

3. A system according to claim 1, wherein said two sampling and holding means (10, 11) are supplied with the same output signal from said envelope detecting means (9), and controlled by different sampling pulses from said timing pulse generating means (15).

4. A system according to claim 1, wherein said control voltage generating means (14) comprises, an up-down counter (24) and a D/A converter (25).

5. A system according to claim 1, wherein said controlling means (13) comprises an Ex-OR gate (22) and a JK-flip flop (23).

6. A system according to claim 2, wherein said compulsory movement causes the reproducing head (1, 2) to move in the direction of the axis of rotation from predetermined positions step by step and at the next action, the head (1, 2) to move in the opposite direction of the axis of rotation from said predetermined position step by step.

7. A system according to claim 1, wherein the reproducing head (1, 2) comprises a support means (3, 4) which includes piezo ceramic material.

8. A system according to claim 1, further comprising a triangular wave generating means (27) for correcting a difference of slant between the trace of said reproducing head and the recorded track in abnormal reproduction, wherein a signal from said triangular wave generating means and said control voltage are mixed and the mixed signal is applied to said reproducing head.

9. A system according to claim 1, wherein the sampling and correcting operation is done relating to frames of the TV-frames.

**Patentansprüche**

1. Ein Spurfolge-Fehler-Korrektursystem für ein Videowiedergabegerät mit einem Wiedergabekopf (1, 2), der angeordnet ist, um abwechselnd mit einem magnetischen Band in Kontakt zu stehen oder außer Kontakt zu sein, mit einer Hüllkurvenerfassungseinrichtung (9) zum Erfassen einer Hüllkurve des wiedergegebenen Videosignals, mit zwei Abtast- und Halte-Einrichtungen (10, 11) jeweils zum Abtasten und Halten eines Ausgangssignals der Hüllkurvenerfassung mit einem vorbestimmten Zeitverhalten in jedem Feld, mit einer Taktpulserzeugungseinrichtung (15) zum Erzeugen von Abtastpulsen, die den Abtast- und Halteeinrichtungen zugeführt werden und zum Erzeugen von Taktsignalen, mit einer Vergleichereinrichtung (12) zum Vergleichen der Ausgangssignale der beiden Abtast- und Halteeinrichtungen der Reihe nach mit einer Steuerspannungserzeugungseinrichtung (14) zum Erzeugen einer Steuerspannung zum Steuern der Bewegung der Wiedergabekopfes, und mit einer Steuereinrichtung (13) zum Steuern der Steuerspannungserzeugungseinrichtung gemäß eines Ausgangssignals der Vergleichseinrichtung und der Taktsignale von der Taktpulserzeugungseinrichtung (15), wobei der Wiedergabekopf (1, 2) gemäß der Steuerspannung in einer derartigen Richtung bewegt wird, daß der Pegel der Hüllkurve vergrößert wird, dadurch gekennzeichnet, daß der Wiedergabekopf (1, 2) lediglich während der Zeitdauer bewegt wird, während der er nicht in Berührung mit dem magnetischen Band steht, so daß die Abtastspur des Wiedergabekopfes ständig parallel zur aufgezichneten Spur gehalten wird.

2. Ein System nach Anspruch 1, ferner mit einer Hülkurvenpegelerfassungseinrichtung (28) yum Vergleichen des Pegels der Hüllkurve des wiedergegebenen Videosignals mit einer vorbestimmten Schwelle, und mit einer Korrektureinrichtung (29), die auf ein Ausgangssignal der Hüllkurvenpegelerfassungseinrichtung anspricht, um die Steuereinrichtung zu steuern, wodurch die Korrektureinrichtung ruckweise den Wiedergabekopf (1, 2) in die Richtung der Rotationsachse Schritt für Schritt bewegt oder diesen in der entgegengesetzten Richtung der Rotationsachse Schritt für Schritt bewegt, wenn der Pegel der Hüllkurve niedriger ist als die vorbestimmte Schwelle, und den Wiedergabekopf anhält, wenn der Pegel der Hüllkurve höher als der vorbestimmte Pegel ist.

3. System nach Anspruch 1, bei dem Abtast- und Halteeinrichtungen (10, 11) mit dem gleichen Ausgangssignal der Hüllkurvenerfassungseinrichtung (9) versorgt werden und durch verschiedene Abtastpulse von der Taktpulserzeugungseinrichtung (15) gesteuert werden.

4. Ein System nach Anspruch 1, bei dem die Steuerspannungserzeugungseinrichtung (14) einen Aufwärts-Abwärts-Zähler (24) und einen D/A-Wandler (25) aufweist.

5. Ein System nach Anspruch 1, bei dem die steuernde Einrichtung (13) ein Exklusiv-ODER-Gatter (22) und ein JK-Flip-Flop (23) aufweist.

6. Ein System nach Anspruch 2, bei dem die ruckartige Bewegung eine Bewegung des Wiedergabekopfes (1, 2) in der Richtung der Rotationsachse von vorbestimmten Lagen aus Schritt für Schritt bewirkt, und in einer darauffolgenden Betriebsweise den Kopf (1, 2) in die entgegengesetzte Richtung der Rotationsachse von der vorbestimmten Lage aus Schritt für Schritt bewegt.

7. Ein System nach Anspruch 1, bei dem dier Wiedergabekopf (1, 2) eine Trägereinrichtung (3, 4) aufweist, die ein piezo-keramisches Material enthält.

8. Ein System nach Anspruch 1, ferner mit einem Sägezahngenerator (27) zum Korrigieren der Differenz der Schrägneigung zwischen der Spur des Wiedergabekopfes und der aufgezeichneten Spur bei anomaler Wiedergabe, wobei ein Signal von der Sägezahngeneratoreinrichtung und das Steuersignal gemischt werden und das gemischte Signal an den Wiedergabekopf angelegt wird.

9. Ein System nach Anspruch 1, bei dem die abtastende und korrigierende Betriebsweise unter Bezugnahme auf Teilbilder von Fernsehteilbildern ausgeführt wird.

**Revendications**

1. Système de correction de l'erreur de centrage de la tête dans un appareil de reproduction vidéo, comprenant une tête de reproduction (1, 2) disposée pour être alternativement mise en et hors de contact avec une bande magnétique, un moyen détecteur d'envelope (9) pour détecter une enveloppe d'un signal vidéo reproduit, deux moyens d'échantillonnage et de maintien (10, 11) servant chacun à échantillonner et à maintenir un signal de sortie du détecteur d'enveloppe suivant une synchronisation prédéterminée dans chaque trame, un moyen générateur d'impulsions de synchronisation (15) pour engendrer des impulsions d'échantillonnage envoyées aux moyens d'échantillonnage et de maintien et des signaux d'horloge, un moyen de comparaison (12) pour comparer les signaux de sortie des moyens d'échantillonnage et de maintien à leur tour, un moyen générateur de tension de réglage (14) pour engendrer une tension de réglage pour régler le déplacement de la tête de reproduction, et un moyen de commande (13) pour commander le moyen générateur de tension de réglage conformément à un signal de sortie du moyen de comparaison et aux signaux d'horloge provenant de moyen générateur d'impulsions de synchronisation (15), la tête de reproduction (1, 2) étant déplacée en fonction de la tension de réglage dans une direction telle qu'elle augmente le niveau de l'enveloppe, caractérisé en ce que la tête de reproduction (1, 2) n'est déplacée que pendant la période où elle n'est pas en contact avec la bande magnétique de sorte que la trace d'analyse de la tête de reproduction est toujours maintenue parallèle à la piste enregistrée.

2. Système selon la revendication 1, caractérisé en ce qu'il comprend en outre un moyen de détection de niveau d'enveloppe (28) pour comparer le niveau de l'enveloppe d'un signal vidéo reproduit à un seuil prédéterminé, et un moyen de correction (29) sensible à un signal de sortie du moyen de détection de niveau d'enveloppe pour commander le moyen de commande, le moyen de correction déplaçant de la sortie de façon forcée la tête de reproduction (1, 2) dans la direction de l'axe de rotation, pas à pas, ou dans la direction opposée de l'axe de rotation, pas à pas, quand le niveau de l'enveloppe est inférieur au seuil prédéterminé, et arrêtant la tête de reproduction quand le niveau de l'enveloppe est supérieur au niveau de seuil.

3. Système selon la revendication 1, caractérisé en ce que les deux moyens d'échantillonnage et de maintien (10, 11) reçoivent le même signal de sortie du moyen de détection d'enveloppe (9), et sont commandés par des impulsions d'échantillonnage différentes provenant du moyen générateur d'impulsions de synchronisation (15).

4. Système selon la revendication 1, caractérisé en ce que le moyen générateur de tension de réglage (14) comprend un compteur progressif-régressif (24) et un convertisseur numérique-analogique N/A (15).

5. Système selon la revendication 1, caractérisé en ce que le moyen de commande (13) comprend une porte OU-exclusif (22) et une bascule du type JK (23).

6. Système selon la revendication 2, caractérisé en ce que le déplacement forcé a pour effet de déplacer la tête de reproduction (1, 2) dans la direction de l'axe de rotation à partir de positions prédéterminées, pas à pas, et, lors de l'action suivante, de déplacer la tête (1, 2) dans la direction opposée de l'axe de rotation à partir de la position prédéterminée, pas à pas.

7. Système selon la revendication 1, caractérisé en ce que la tête reproduction (1, 2) comprend un support (3, 4) qui inclut un matériau de céramique piézoélectrique.

8. Système selon la revendication 1, caractérisé en ce qu'il comprend en outre un moyen générateur d'ondes triangulaires (27) pour corriger une différence de pente entre la trace de la tête de reproduction et la piste enregistrée dans un mode de reproduction anormal, un signal provenant du moyen générateur d'ondes triangulaires et la tension de réglage étant mélangés et le signal mélangé étant envoyé à la tête de reproduction.

9. Système selon la revendication 1, caractérisé en ce que l'opération d'échantillonnage et de correction est exécutée relativement à des images des images de télévision.

FIG.1.

FIG.2.

(a) FRAME HSW $F_1$ $F_2$ $F_3$ $F_4$ $F_5$ $F_6$ $F_7$ $F_8$ $F_9$

(b) CONTROL VOLTAGE

(c) $F_1$ $F_2$ $F_3$ $F_4$ $F_5$ $F_6$ $F_7$ $F_8$

$A_1$ $B_1$ $A_2$ $B_2$ $A_3$ $B_3$ $A_4$ $B_4$ $A_5$ $B_5$ $A_6$ $B_6$ $A_7$ $B_7$ $A_8$

(d) RF SIGNAL

Fig. 3.

FIG.4.

VTR 8

RF SIGNAL

ENVELOPE DETECTOR 9

S & H CIRCUIT 10

S & H CIRCUIT 11

COMPARING CIRCUIT 12

CONTROL CIRCUIT 13

STEP VOLTAGE GENERATOR 14

TIMING PULSE GENERATOR 15

Fig.5.

4

FIG.6.

0 050 024

0 050 024

FIG. 7.

6

STILL MOTION    DOUBLE FAST MOTION

MAGNETIC
TAPE

RECORDED
TRACK

*FIG. 8.*

(a)
HSW

(b)
TRIANGULAR
WAVE

(c)
CONTROL
VOLTAGE

(d)
(b)+(c)

(e)
RF SIGNALS

*FIG. 9.*

FIG.10.

FIG.11.

HEAD WITH AZIMUTH A

HEAD WITH AZIMUTH B

$A_1$

$B_1$

$A_2$

$B_2$

FIG. 12.

RF SIGNAL LEVEL

0     60μ

E     F

0   30μ   60μ   90μ   120μ

MOVING DISTANCE OF A HEAD

FIG. 13.

VTR — 8

9

10

11

12

13

14

15

ENVELOPE LEVEL DETECTING CIRCUIT — 28

CORRECTING CIRCUIT — 29

FIG. 14.

RECORDED PART

NON RECORDED PART

RECORDED PART

RECORDED TRACK

HEAD

HEAD

RF SIGNAL LEVEL

OUTPUT OF ENVELOPE LEVEL DETECTOR

Fig.15.